# EUROPEAN PATENT APPLICATION

(11) **EP 4 057 319 A1**
(43) Date of publication of application: **14.09.2022**
(21) Application number: 22160046.3
(22) Date of filing: 03.03.2022
(51) Int. Cl.: H01J 5/18, H01J 33/04, H01J 35/18, H01J 47/00, H01J 37/244, G01T 1/00, G01T 7/00

(54) **X-RAY DETECTOR AND METHOD OF MANUFACTURING WINDOW PORTION**

(30) Priority: 12.03.2021 JP 2021040238
(71) Applicant: Jeol Ltd., Akishima-shi, Tokyo 196-8558 (JP)
(72) Inventor: NAKANO, Hirofumi, Tokyo, 196-8558 (JP)
(74) Representative: Boult Wade Tennant LLP

(57) **Abstract**

A window portion has a membrane (38) that separates a space inside a container and a space outside the container, and a structure (glass structure) (40) that is bonded to the membrane (38) to support the membrane (38). The membrane (38) and the structure (40) are bonded by anodic bonding, and a chemical bonding layer is formed between them. The structure (40) is composed of a grid (42) having a plurality of openings, and an outer frame (44) around the grid. A metal layer may be provided between the membrane (38) and the structure (40).

## Description

### TECHNICAL FIELD

The present disclosure relates to an X-ray detector and to a method of manufacturing a window portion, and in particular to a structure and a manufacturing process of a window portion that allows X-rays to pass therethrough.

### BACKGROUND

An electron microscope, such as a scanning electron microscope or a transmission electron microscope, is equipped with an X-ray detector as needed. The X-ray detector detects characteristic X-rays emitted from a sample when the sample is irradiated with an electron beam. A fluorescent X-ray analyzer incorporates an X-ray detector that detects fluorescent X-rays emitted from a sample when the sample is irradiated with X-rays. Specific examples of the X-ray detectors detecting characteristic X-rays, fluorescent X-rays, or the like include an Energy Dispersive X-ray Spectroscopy (EDS) detector. The EDS detector is usually configured as a cooling type X-ray detector.

The cooling type X-ray detector has an X-ray sensor, a cooler for cooling the X-ray sensor, a container for accommodating the X-ray sensor, and the like. By making the inside of the container a closed vacuum space, it is possible to prevent occurrence of dew condensation in the X-ray sensor and to prevent adhesion of foreign matter to the X-ray sensor. The container is provided with a window portion that allows X-rays to pass therethrough.

The window portion is generally composed of a membrane, and a structure for supporting the membrane. The membrane is a member that separates a space inside the container (vacuum space) and a space outside the container (in some cases, atmospheric pressure space). A thin film membrane is used as the membrane in order to reduce X-ray attenuation when X-rays pass through the membrane. The structure is a member for supporting and protecting the thin film membrane to protect it from a pressure difference that occurs between the two spaces. The structure is also referred to as a grid.

The structure has a plurality of openings, and a solid portion of the structure (portion that is not an opening) is bonded to the membrane. To increase the X-ray detection sensitivity, it is desired to reduce the area of the solid portion of the structure when viewed from the X-ray generation side; that is, to increase the aperture ratio of the structure. The window portion with the thin film membrane is referred to as an Ultra Thin Window (UTW).

JP 4184701 B (Patent Document 1) discloses a radiation detector. Anodic bonding is used in a manufacturing process of the radiation detector. Patent Document 1 nowhere discloses a membrane that allows X-rays to pass therethrough or a structure for supporting the membrane.

### CITATION LIST

PATENT DOCUMENT 1: JP 4184701 B

### SUMMARY

In manufacturing a window portion of an X-ray detector, it is necessary to make a membrane as thin as possible to thereby reduce X-ray attenuation therethrough and to support the membrane with a structure having sufficient strength. In fabricating the structure, semiconductor manufacturing technology (Chemical Vapor Deposition (CVD), etching, and the like) can be used. For example, the structure for supporting the membrane can be formed on the membrane by forming a deposited layer on the membrane and then forming a plurality of openings in the deposited layer by etching. However, in this case, the thickness of the structure is limited due to a limit in thickness of the deposited layer, or the membrane is damaged during etching, or only limited patterns of openings can be formed in the structure.

An object of the present disclosure is to improve the performance of the window portion of the X-ray detector. Alternatively, an object of the present disclosure is to increase the strength and the aperture ratio of the window portion of the X-ray detector. Alternatively, an object of the present disclosure is to increase the degree of freedom in designing the structure for supporting the membrane of the X-ray detector.

An X-ray detector according to the present disclosure includes a container that has a window portion and a sensor that is provided in the container and detects X-rays passing through the window portion, and the X-ray detector is characterized in that the window portion includes a membrane that separates a space inside the container and a space outside the container, and a glass structure that has a plurality of openings through which X-rays pass and that is bonded to the membrane to support the membrane.

A method of manufacturing a window portion according to the present disclosure includes the steps of fabricating a glass structure having a plurality of openings through which X-rays pass, bonding the glass structure to a membrane formed on one surface of a substrate body by anodic bonding, and after bonding the glass structure to the membrane, forming a recess from the other surface side of the substrate body to thereby expose the membrane through the recess.

### BRIEF DESCRIPTION OF DRAWINGS

Embodiments of the present disclosure will be described based on the following figures, wherein:
FIG. 1 is a cross sectional view showing an X-ray detector according to an embodiment;
FIG. 2 is a front view of a window portion according to the embodiment;
FIG. 3 is a cross sectional view of the window portion according to the embodiment;
FIG. 4 is a diagram showing a first example of a method of manufacturing the window portion;
FIG. 5 is a diagram showing a second example of the method of manufacturing the window portion;
FIG. 6 is a diagram showing a variation of the second example; and
FIG. 7 is a diagram showing a variation of the window portion.

### DESCRIPTION OF EMBODIMENTS

Hereinafter, embodiments will be described with reference to the drawings.

### (1) Summary of Embodiments

An X-ray detector according to an embodiment includes a container that has a window portion and a sensor that is provided in the container and detects X-rays passing through the window portion. The window portion includes a membrane that separates a space inside the container and a space outside the container, and a glass structure that has a plurality of openings through which X-rays pass and that is bonded to the membrane to thereby support the membrane.

In the above configuration, the glass structure is bonded to the membrane, and the membrane is supported by the glass structure. This configuration differs from a conventional window portion in that a glass material is used for the structure; in other words, in that the structure is made of a glass material which is not usually used as a reinforcing material.

The glass structure having a desired pattern of openings may be fabricated relatively easily by applying various known glass processing techniques to a plate-shaped glass material. In this case, it is possible to select a thickness of the glass material as desired and even easily increase that thickness to a level that satisfies the strength requirements, for example. The glass processing techniques include cutting technology, such as laser processing and sandblasting.

By selecting, as a membrane material (or a material for a substrate with the membrane) and the glass material, a combination of materials suitable for anodic bonding, the membrane and the glass structure can be chemically bonded to each other by anodic bonding. That is, integration of the membrane and the glass structure can be achieved. Provided that the membrane and the glass structure are thus firmly bonded, it becomes possible to increase the aperture ratio or make the film thinner.

As such, the use of the glass structure makes it possible to achieve the window portion having a better performance than the conventional window portion. The performance of the X-ray detector is thus improved.

In the embodiment, the window portion includes a chemical bonding layer formed between the membrane and the glass structure by anodic bonding. The chemical bonding layer may also be referred to as an anodic bonding layer. In the anodic bonding process, cations accumulate near the interface between the membrane and the glass structure in the glass structure to which a negative potential is applied, while anions accumulate near the interface in the membrane to which a positive potential is applied. Strong bonding is thus formed by a chemical reaction near the interface.

In the embodiment, a first metal layer is provided on the surface of the membrane, and the membrane and the glass structure are bonded to each other via the first metal layer by anodic bonding. The chemical bonding layer includes the first metal layer. When the membrane and the glass structure are directly bonded to each other in the anodic bonding process, they may fail to be bonded stably or sufficiently, depending on the situation. In this case, by providing the first metal layer between the membrane and the glass structure, the membrane and the glass structure can be stably and firmly bonded to each other via the first metal layer.

In the embodiment, the glass structure is covered with a second metal layer. The second metal layer functions as a light blocking layer and an antistatic layer. With this configuration, it is possible to protect the sensor from external light and solve or alleviate the problem caused by electrostatic charge. When this configuration is adopted, the first metal layer or the second metal layer is provided in each of the openings. The light blocking layer means a layer that has a light blocking rate of 20% or 30% or more, for example.

In the embodiment, the glass structure is bonded to one side of the membrane. The glass structure has a grid having a plurality of openings, and one outer frame provided on the periphery of the grid. The window portion includes the other outer frame bonded to the other side of the membrane. In this configuration, the one outer frame is bonded to the one side of the peripheral portion of the membrane, and the other outer frame is bonded to the other side of the peripheral portion of the membrane, resulting in the peripheral portion of the membrane sandwiched between the two outer frames. The membrane can thus be supported more firmly. The other outer frame may be a part of a substrate remaining from the process of manufacturing the window portion.

In the embodiment, each of the openings has a hexagonal shape. The glass structure has a honeycomb structure. This structure enables a further increase in the rigidity of the glass structure or an increase in the aperture ratio of the glass structure.

A method of manufacturing the window portion according to an embodiment includes a fabricating step, a bonding step, and a forming step. In the fabricating step, a glass structure having a plurality of openings through which X-rays pass is fabricated. In the bonding step, the glass structure is bonded to a membrane formed on one surface of a substrate body by anodic bonding. In the forming step, a recess is formed from the other surface side of the substrate body after the bonding step. By doing so, the membrane is exposed through the recess.

With the above configuration, the glass structure is bonded to the membrane while the membrane is supported by the substrate body, and therefore, the membrane can be protected. After that, the necessary recess is formed in the substrate. The membrane is supported by the glass structure during and after the recess forming process.

### (2) Details of Embodiments

FIG. 1 schematically shows an X-ray detector according to an embodiment. The illustrated X-ray detector is provided on an electron microscope, a fluorescent X-ray analyzer, or the like. The X-ray detector is, for example, an EDS detector that is a cooling type X-ray detector.

The X-ray detector 10 has a plate 12 and a case 14 that constitute a container. An internal space 16 of the container is a vacuum space. Because the internal space 16 is a vacuum space, dew condensation on a sensor 24 (described below) is prevented, and adhesion of foreign matter to the sensor 24 is prevented. An external space 18 is, for example, a part of a sample chamber or a space communicating with the sample chamber. Although the external space 18 is usually a vacuum space, it becomes an atmospheric pressure space during sample exchange.

The plate 12 is made of an insulating material, for example. It may be made of metal, ceramic, or the like. The case 14 is, for example, made of metal, such as stainless steel. It may be made of ceramic or the like.

A sensor assembly 20 is disposed inside of the case 14. The sensor assembly 20 includes the sensor 24 for detecting X-rays and a cooler 22 for cooling the sensor 24. The cooler 22 includes a Peltier element, for example. Two terminals 26 and 28 penetrate through the plate 12. The two terminals 26 and 28 are connected to two signal lines 30 and 32, respectively. The plate 12 is connected to a heat conductive member 34. The heat conductive member 34 is composed of a heat pipe, for example.

The case 14 is provided with a window portion 36 that functions as a radiation incident window. The window portion 36 is located on an axis connecting an X-ray generation source and the sensor 24 and is in a posture orthogonal to the axis. The window portion 36 has a membrane that separates the internal space 16 and the external space 18. A thin film membrane is used as the membrane to reduce X-ray attenuation through the membrane. A structure is provided on the inner side of the thin film membrane (on the sensor 24 side) to prevent the thin film membrane from being damaged by a pressure difference between the internal space 16 and the external space 18. The structure has a plurality of openings, and X-rays 37 passing through the openings are detected by the sensor 24. The window portion 36 will be described in detail below.

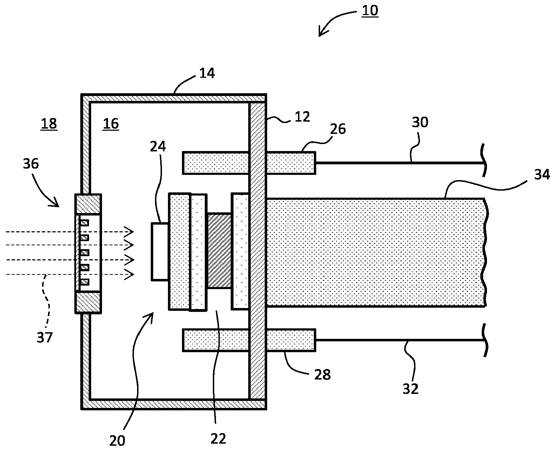

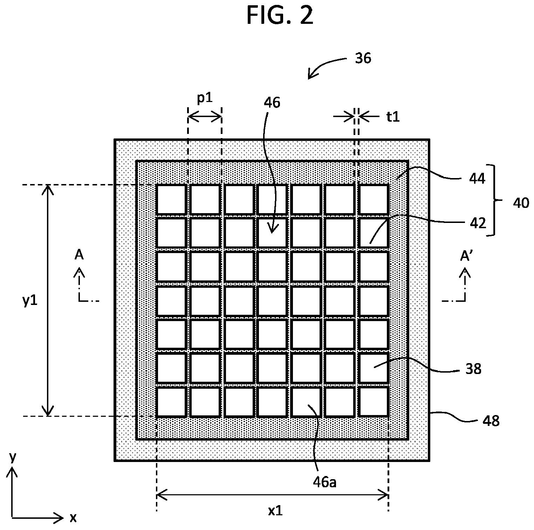

FIG. 2 is a front view of the window portion 36. FIG. 2 shows the form of the window portion 36 viewed from the internal space side. The window portion 36 has a membrane 38, a structure 40, and a holder 48. In the illustrated example, the membrane is an SiN membrane (silicon nitride membrane) that is a ceramic membrane. The thickness of the membrane is set to be within the range of several tens of nm to 100 nm, for example. Specifically, the thickness of the membrane is 50 nm, for example. The SiN membrane is characterized in having low gas permeability and good heat resistance. In the illustrated structural example, the membrane 38 has a uniform thickness and extends in a planar form. Its outer shape is square. The membrane 38 may have other outer shapes, such as circular.

The structure 40 is a glass structure made of a glass material. The structure 40 is a reinforcing member or a supporting member. The structure 40 is roughly composed of a grid 42 and an outer frame 44. The outer frame 44 surrounds the grid 42, and the grid 42 and the outer frame 44 are integrated. The grid 42 has an opening array 46, and the opening array 46 is composed of a plurality of openings 46a arranged in the X and Y directions.

In the illustrated example, the individual openings 46a have a square shape. Other possible shapes of the individual openings 46a include hexagonal, circular, and elliptical shapes. A plurality of slits arranged in the X direction or the Y direction may be provided as the plurality of openings. The illustrated grid 42 is composed of a plurality of vertical beams arranged in the X direction and a plurality of horizontal beams arranged in the Y direction, which together form a lattice pattern.

In the embodiment, the membrane 38 and the structure 40 are bonded by anodic bonding, and a chemical bonding layer (anodic bonding layer) is formed between them (interface). A material for the membrane 38 (specifically, a substrate material) and a glass material for the structure 40 are selected so that anodic bonding can be performed. As described above, SiN is selected as a material for the membrane 38 in the embodiment. Other materials may be selected for the membrane 38.

In the embodiment, borosilicate glass is used as the glass material. The coefficient of thermal expansion of borosilicate glass is equivalent to the coefficient of thermal expansion of an Si substrate (SiN membrane). In summary, from the viewpoint of anodic bonding, a glass material containing any of SiO₂, B₂O₃, Na₂O, CaO, MgO, Al₂O₃, ZnO, and Li₂O may be used as the glass material constituting the structure 40. An appropriate glass material is selected according to various conditions.

The two-dimensional size of a portion including the openings in the structure 40 (that is, x1 and y1 in the figure) is set to be within the range of 5 mm to 20 mm, for example. Specifically, the size is 10 mm, for example. The width t1 of each of the beams (vertical beam and horizontal beam) is set to be between 20 µm and 60 µm, for example. Specifically, the width t1 is 40 µm, for example. The pitch p1 of the opening is set to be within the range of 200 µm to 800 µm, for example. Specifically, the opening pitch p1 is 500 µm, for example. There are, for example, several tens of vertical beams arranged in the X direction and several tens of horizontal beams arranged in the Y direction. Each numeric value included in the present specification is merely an example.

As described below, it is also possible to form a metal layer on the surface of the membrane 38 and then bond the membrane 38 and the structure 40 by anodic bonding. The structure 40 supporting the membrane 38 is held by the holder 48. The holder 48 is made of metal, ceramic, or the like. The holder 48 is fixed to the case. A part of the case may function as the holder 48.

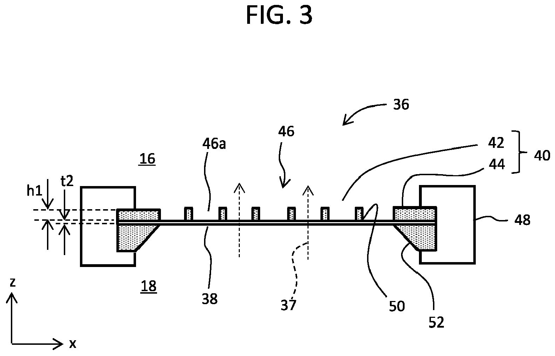

FIG. 3 schematically shows a cross section taken along A-A' in FIG. 2. In FIG. 3, the elements that have been described with reference to FIG. 2 are assigned the same reference numerals as in FIG. 2. The window portion 36 has the membrane 38, the structure 40, and the holder 48 as described above.

In FIG. 3, the internal space 16 is above the membrane 38, and the external space 18 is below the membrane 38. The structure 40 is the glass structure as described above. An outer frame (one outer frame) 44 is bonded to one side of a peripheral portion of the membrane 38, and an outer frame (the other outer frame) 52 is bonded to the other side of the peripheral portion of the membrane 38.

The outer frame 52 is in fact a remaining portion of a substrate. A recess is formed in an Si substrate body described below by etching the other side of the Si substrate body, and the other side of the membrane 38 (the external space 18 side) is exposed through the recess. The portion remaining around the recess after etching is the outer frame 52. As illustrated, the one side of the peripheral portion of the membrane 38 is supported by the outer frame 44, and the other side of the peripheral portion is supported by the outer frame 52. In other words, the membrane 38 is sandwiched between the two outer frames 44 and 52. This reinforces the structure of the window portion. The membrane 38 can thus be better protected.

The membrane 38 and the structure 40 are bonded by anodic bonding as described above. The chemical bonding layer, which is an anodic bonding layer, is formed at an interface 50 between the membrane 38 and the structure 40. The thickness t2 of the membrane 38 is, for example, 50 nm, as described above. The height (thickness) of the structure 40 is set to be within the range of 100 µm to 600 µm, for example. Specifically, the height (thickness) of the structure 40 is 300 µm, for example. The X-rays 37 passing through the membrane 38 and any of the openings are detected by the sensor.

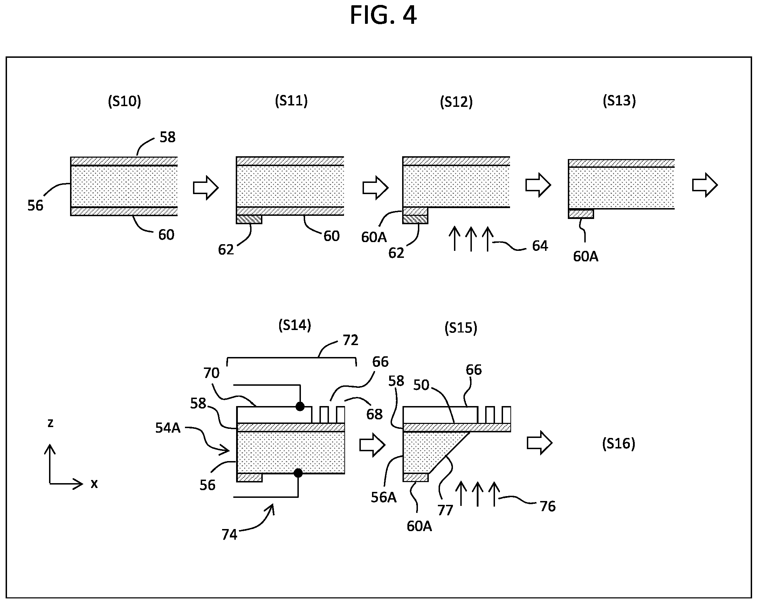

FIG. 4 shows a first example of a method of manufacturing the window portion. A plurality of cross sections shown in FIG. 4 are cross sections of one end portion of the window portion. The first example has steps S10 to S16. Although not explicitly shown in FIG. 4, the first example also includes a structure fabricating step (glass substrate processing step) as described below.

In S10, SiN layers 58 and 60 are respectively formed on the upper surface and the lower surface of an Si substrate body 56 by CVD (specifically, low pressure CVD). The Si substrate body 56 may be an Si wafer. In this case, a plurality of window portions can be manufactured simultaneously. The thickness of the SiN layers 58 and 60 is 50 nm, for example. Of the two SiN layers 58 and 60, the SiN layer 58 is eventually used as a separation membrane.

In S11, a resist layer 62 is formed as a mask on the SiN layer 60. At this time, a general lithography technique or a general semiconductor manufacturing technique is used. That is, a photoresist liquid is applied onto the SiN layer 60, and then subjected to exposure and development so that a part of the Si substrate body 56 eventually forms a frame body.

In S12, the lower SiN layer is subjected to etching by dry etching (specifically, Reactive Ion Etching (RIE)) (see reference numeral 64). By doing so, only a masked part 60A of the SiN layer remains. In S13, the resist layer 62 is removed.

In S14, a fabricated structure (glass structure) 66 is placed on the SiN layer 58 of a Si substrate 54A that has undergone the above steps, and in that state, anodic bonding is performed (see reference numeral 74) under heating (see reference numeral 72).

At this time, the structure 66 side serves as a cathode, and the Si substrate body 56 side serves as an anode. A temporary electrode plate may be used, if necessary. A heater is used for heating. The heater may also serves as an electrode. The heating temperature is set to be within, for example, the range of 150°C to 450°C, and preferably within the range of 200°C to 400°C. The voltage applied during anodic bonding is set to be within, for example, the range of 150 V to 1000 V, and preferably within the range of 200 V to 600 V. The SiN layer 58 and the structure 66 are chemically bonded by anodic bonding and integrated, resulting in a chemical bonding layer at the interface between them. The structure 66 is composed of a grid 68 and an outer frame 70 surrounding it.

Prior to implementation of S14, the structure fabricating step is performed. Specifically, a glass plate having a predetermined thickness is processed. More specifically, the glass plate is adjusted to have a desired size, and an array of openings are formed in the glass plate in a predetermined pattern. At this time, known glass processing techniques, such as laser processing, sandblasting, and the like, may be utilized.

In S15, wet etching is performed on a laminate formed as described above by using an aqueous solution of tetramethylammonium hydroxide (TMAH), potassium hydroxide (KOH), or the like (see reference numeral 76). The etching is anisotropic etching for etching the back side of the Si substrate body 56. At this time, the remaining part 60A of the SiN layer functions as a mask, and a slope 77 is formed as a result of the anisotropic etching. In wet etching, erosion of the structure 66 is basically not a problem. After implementation of S15, a part 56A of the Si substrate body remains. The part 56A functions as the outer frame. By wet etching, the recess is formed on the other side of the Si substrate body, and the other side of the SiN layer 58 is exposed through the recess. The separation membrane is formed in this manner.

In S16, a holder is attached to the processed laminate to thereby form the window portion. The window portion is attached to the case. To attach the holder to the processed laminate, techniques including adhesive bonding, brazing, anodic bonding, and the like may be used.

In the above method of manufacturing the window portion, when the processed structure is bonded with respect to the Si substrate in which the recess is yet to be formed, the SiN layer is supported by the Si substrate body, and the SiN layer can thus be protected. In addition, the recess is formed in the Si substrate after the structure is bonded; that is, after the SiN layer is structurally reinforced, and therefore, the SiN layer can be protected during and after the recess forming process. Although it is also possible to bond the structure 66 to the SiN layer 58 in the first step, in this case, the structure 66 may be damaged in the subsequent steps. In contrast to this, in the above method of manufacturing the window portion, the structure 66 is bonded to the SiN layer 58 immediately before the recess is formed, so that the structure 66 can be protected.

No particular limitation is imposed on the thickness of the structure of the window portion manufactured as described above, and the structure can thus be made sufficiently thick as necessary. This enables manufacture, in a simple manner, of the window portion having a large aperture ratio. In addition, the membrane can be made thinner, provided that the structure exhibits sufficient strength. In this case, it becomes possible to further reduce X-ray attenuation through the membrane, and combination of the reduced X-ray attenuation with the increased aperture ratio provides increased X-ray detection sensitivity. According to the above manufacturing method, it is also possible to increase the degree of freedom in designing a pattern of openings, thereby achieving an advantage of easy fabrication of a pattern of openings, which has been difficult to achieve in the past.

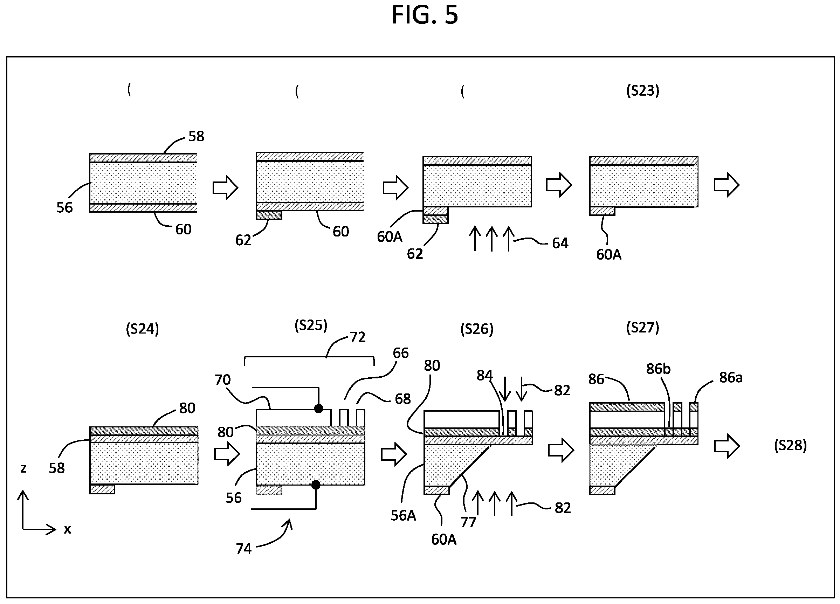

FIG. 5 shows a second example of the method of manufacturing the window portion. A plurality of cross sections shown in FIG. 5 are cross sections of one end portion of the window portion. In FIG. 5, the elements that are illustrated in FIG. 4 are assigned the same reference numerals as in FIG. 4, and their repeated description will be omitted. The second example has steps S20 to S28. Although not explicitly shown in FIG. 5, like the first example, the second example also includes the structure fabricating step (glass substrate processing step) as described below.

In the second example, S20 to S23 are the same as the above S10 to S13. In S24, an aluminum layer (thin film) 80 that is a metal layer is formed on the upper side of the SiN layer 58 by sputtering. The thickness of the layer 80 is set to be within the range of 5 nm to 1 µm, for example. Specifically, the thickness of the layer 80 is 20 nm, for example. The aluminum layer 80 is a layer integrated with the SiN layer.

In S25, the processed structure (glass structure) 66 is placed on the processed Si substrate, which is specifically the aluminum layer 80, and in that state, anodic bonding is performed (see reference numeral 74) under heating (see reference numeral 72). A chemical bonding layer is formed at the interface between the structure 66 and the Si substrate body 56. The chemical bonding layer includes the aluminum layer 80. By bonding the Si substrate body 56 and the structure 66 via the aluminum layer 80, stable and stronger chemical bonding can be achieved.

In S26, wet etching (anisotropic etching) is performed on the Si substrate body 56 by means of TMAH or the like (see reference numeral 82). Thus, the recess is formed on the other surface side of the Si substrate body, and the other side of the SiN layer 58 is exposed through the recess. The remaining portion 56A of the Si substrate body functions as the outer frame. By wet etching, the aluminum layer portion in each opening is etched (see reference numeral 84), and one surface of the SiN layer is exposed in each opening. The SiN layer functions as a separation membrane.

In S27, a second aluminum layer 86 is formed on one side of a laminate composed of the Si substrate and the structure by sputtering or resistance heating vapor deposition. The second aluminum layer 86 covers the entire structure (see reference numeral 86a) and also covers the bottom surface in each opening (see reference numeral 86b). The entire window portion is covered with the aluminum layer. The aluminum layer is grounded. This prevents electrical charging of the window portion. The aluminum layer also exerts a light-blocking function and protects the sensor from external light. In forming each of the metal layers, metals, such as B, Ti, Ni, Cu, Ag, Au, and Pt may be used instead of Al. The metal layer may be formed on the SiN layer from the beginning. The second aluminum layer 86 is formed so as to have a light blocking rate of 40% or 50% or more, for example.

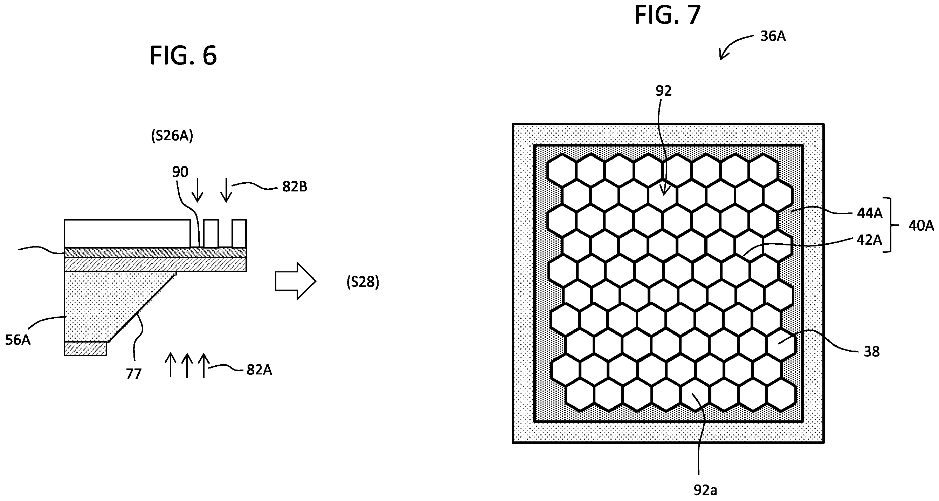

FIG. 6 shows a variation of the second example. In S26A, which can replace the above S26, by using a wet etching solution that does not etch the aluminum layer 80, it is possible to form the recess by etching the Si substrate body (see reference numeral 82A) while maintaining the aluminum layer 80 as it is. That is, the aluminum layer 80 at the bottom of each opening can be saved (see reference numeral 90) even by wet etching (see reference numeral 82B). According to this variation, the step of forming the second aluminum layer can be omitted.

FIG. 7 illustrates a variation of the window portion. The illustrated window portion 36A is composed of the membrane 38 and a structure (glass structure) 40A. The structure 40A is composed of a grid 42A and an outer frame 44A. The grid 42A has an opening array 92. The opening array 92 is composed of a plurality of openings arranged in two dimensions. Each opening 92a has a hexagonal shape, and the grid 42A has a honeycomb structure. Although, in the past, fabrication of this kind of special structure was difficult, with this embodiment, the degree of freedom in processing the structure is increased, and the honeycomb structure as illustrated can be easily formed. The honeycomb structure allows the structure 40A to have an increased aperture ratio while increasing its strength. Although, in FIG. 7, the honeycomb structure as a whole has a generally rectangular shape, it may have a circular outer shape if a light receiving surface of the sensor is circular.

As described above, with the present embodiment, the glass structure is bonded to the membrane, and the membrane is supported firmly by the glass structure. The glass structure having a desired pattern of openings can be made relatively easily by applying various known glass processing techniques to a plate-shaped glass material. In this case, it is possible to select a thickness of the glass material as desired, and to easily increase that thickness to a level that satisfies the strength requirements, for example.

## Claims

1. An X-ray detector comprising:
a container (14) that has a window portion (36); and
a sensor (24) that is provided in the container (14) and detects X-rays passing through the window portion (36), wherein
the window portion (36) includes
a membrane (38) that separates a space inside the container and a space outside the container, and
a glass structure (40) that has a plurality of openings through which X-rays pass and that is bonded to the membrane (38) to support the membrane (38).

2. The X-ray detector according to Claim 1, wherein the window portion (36) includes a chemical bonding layer formed between the membrane (38) and the glass structure (40) by anodic bonding.

3. The X-ray detector according to Claim 2, wherein
a first metal layer (80) is provided on a surface of the membrane (38),
the membrane (38) and the glass structure (40) are bonded via the first metal layer (80) by the anodic bonding, and
the chemical bonding layer includes the first metal layer (80).

4. The X-ray detector according to Claim 3, wherein
the glass structure is covered with a second metal layer (86), and
the second metal layer (86) functions as a light blocking layer and an antistatic layer.

5. The X-ray detector according to Claim 1, wherein
the glass structure (40) is bonded to one side of the membrane (38),
the glass structure (40) has
a grid (42) having the plurality of openings, and
one outer frame (44) provided on a periphery of the grid (42), and
the window portion (36) includes the other outer frame (52) bonded to the other side of the membrane (38).

6. The X-ray detector according to Claim 1, wherein
each of the openings has a hexagonal shape, and
the glass structure (40) has a honeycomb structure.

7. A method of manufacturing a window portion comprising the steps of:
fabricating a glass structure (40) having a plurality of openings through which X-rays pass;
bonding the glass structure (40) to a membrane (38) formed on one surface of a substrate body (56) by anodic bonding; and
after bonding the glass structure (40) to the membrane (38), forming a recess from the other surface side of the substrate body (56) to thereby expose the membrane (38) through the recess.
